# EUROPEAN PATENT SPECIFICATION

(11) **EP 0 735 912 B1**
(45) Date of publication and mention of the grant of the patent: **18.10.2006**
(21) Application number: 95934826.9
(22) Date of filing: 25.10.1995
(51) Int. Cl.: B01D 5/00, B01D 51/06, F23J 15/06, F25J 3/08

(54) **A METHOD FOR THE PURIFICATION OF AIR OR OTHER GASES, POLLUTED BY POWDERS, FUMES, GASES, VAPOURS AND SOLVENTS, ALSO AROMATIC**
EIN VERFAHREN FÜR DIE REINIGUNG VON LUFT UND ANDEREN GASEN, DIE VON PULVERN, RAUGASEN, GASEN, DÄMPFEN UND LÖSUNGEN, AUCH AROMATEN, VERUNREINIGT SIND
PROCEDE D'EPURATION DE L'AIR OU D'AUTRES GAZ POLLUES PAR DES POUDRES, FUMEES, GAZ, VAPEURS, SOLVANTS ET COMPOSES AROMATIQUES

(30) Priority: 26.10.1994 IT RM940693
(43) Date of publication of application: 09.10.1996
(73) Proprietor: De Simone, Romano, 00043 Ciampino RM (IT)
(72) Inventor: De Simone, Romano, 00043 Ciampino RM (IT)
(74) Representative: Iannone, Carlo Luigi
(86) International application number: PCT/IT1995/000173
(87) International publication number: WO 1996/013315

(56) References cited:
- US-A- 3 883 327
- US-A- 4 141 701
- US-A- 4 401 444
- Dialog Information Services, File 351, World Patent Index 81-96, Dialog accession no. 004447564, WPI accession no. 85-274442/44, KHLORVINIL COMBINE: "Multistage gas prificn. absorber has sprinkling device in form of pipe with openings positioned coaxially in each of venturi"; & SU,A,1151276, (C.T. BORK), 23 April 1985 (23.04.85), figures 1-3

## Description

The present invention concerns a new method for the depuration of air polluted by powders, fumes, gases, vapours and solvents, also aromatic, no matter how they are produced, by means of instant saturation in vapour of the gaseous current and its further instant condensing by compression.

The method is particularly advantageous in the destruction of the solvents contained in the air current, even if with the same treatment also the other polluting agents are destroyed.

In fact, it is well known that up to now active carbon is used for absorbing the solvents, and said active carbon must be re-generated involving great transport and treatment costs.

Furthermore, the so-called cold instant evaporation processes of the liquid in the air, working by spraying the liquid by means of atomizer nozzles, as well as the instant condensing processes of the liquid, obtained by the compression of the air, are known to the prior art.

At present, also fans having the sole function of air extractors are used in the air depuration systems, and are therefore usually placed downstream of the air depuration system and straight upstream of the flue.

In the past, also the phenomenon of the vapour condensing on the so-called condensing germs, i.e. on the impurities usually contained in the air, has been noted.

Also the phenomenon of the over-saturated vapour condensing onto the so-called anti-drop and anti-condensation metal meshes is well known.

Depuration systems for gaseous flows are known from IT-1,240,778-B corresponding to the preamble of claim 1, SU-1, 151, 276-A and US-4,401,444-A.

The aims of the method according to the present invention are many and considerable:
- the possibility of making use of a humid air depuration method, using the following effects of evaporation and condensing which take place instantly, for reducing the linear dimensions of the systems;
- the realization of depuration machines without the so-called filling bodies and for which therefore it becomes possible, for the same capacity of air to be depurated, to reduce the dimensions and the production costs by simply increasing the average speed of the air flow and the capacity of the liquid flow;
- the possibility of realizing depuration machines provided with a high pressure fan, which may also have the functions of air extractor from the catching ambient to the atmosphere, without being forced to the use of two fans placed in series;
- the possibility of depurating air currents even at high temperatures, due to the considerable lowering of the temperature value that may be obtained by means of atomizer-evaporators, due to the presence of water in the circulating liquid;
- the realization of a method that takes away from the air any kind of polluting agent, also aromatic, by simply adopting a circulating liquid suitable for catching it, i.e. for bringing it into solution or into dispersion in the liquid body;
- the possibility of an easy elimination from the depuration machine of the liquids to be re-generated when they are saturated with polluting agents, for storing them into a tank which not necessarily is provided near said machine;
- the performing even of the submicronic depuration of the air, due to the growing of the polluting particles due to condensing;
- the possibility of making use of machines that will never -get stopped up because they don't have filling bodies;
- the possibility of increasing the depuration degree of the process by increasing the prevalence of the compressor-fan and reducing, at the same time, the free light in the Venturi throat and/or the outlet sections of the air from the calm chambers, placed downstream of the compressor-fan, as well as varying the purity degree of the circulating liquid;
- the possibility of providing the depurating machine with a small boiler for the de-gassing of the absorbing liquid, with the following recollection of the concentrated solvents;
- the possibility of providing said machine also with a burner for the concentrated solvents

For reaching above mentioned aims and for destructing said polluting agents, the method according to the present invention provides for their absorption in a liquid phase inside a machine, in which an intimate dynamic mixing between the air to be depurated and the circulating liquid may be obtained. This method is defined in the appended set of claims, with particular reference to claim 1.

The liquid circulating in said machine may consist - according to the present invention - of a heterogeneous-mixture of hydrocarbons and treated water, which may be separated by means of a simple setting, due to the different specific weight of each liquid, as well as of a homogeneous mixture of treated water and solvents, or other liquids, that may be separated by a distillation tower.

For specification facilities, but underlining that the one as well as the other mixture as well as the liquid dispersion, however it may be realized, can be used, only the liquid will be mentioned for explaining the method according to the present invention.

The same liquid that is used for absorbing the polluting agents, is used for cooling down the gaseous current - if it is too warm - as well as for evaporating and saturating in vapour the air current, and for washing and removing condensations and solid particles that fall down on the walls of the calm chambers.

The same liquid goes into circulation in the treatments, with the purpose of re-establishing the functional features as it absorbs polluting agents.

Such features consist e.g. in the capacity of adhering to polluting particles, of melting gases and solvents and of making condensate vapours, absorbing also the aromatic components of the polluting substances.

For what concerns the thermodynamic process used for destroying the polluting agents present in the air current, it shall be underlined that, if the temperature of the air current to be depurated is not above 100 °C. it will not be necessary to add nor to take away heat sensitive to said air current, but only vapour additions and taking offs, at a temperature near to the ambient temperature

If the air temperature is above the one mentioned, the same may be reduced upstream of the described cycle.

The high content of water in the liquid is used for cooling down the air current - as already mentioned as well as, in case of use in the mixture also of other liquids like hydrocarbons, for preventing the formation of sparks with the danger of explosions, if they were used without water.

The method according to the present invention will be described more in detail hereinbelow according to one possible embodiment, comprising the following main treatments to the air current to be depurated:
- the air to be depurated is atomized with spraying nozzles with appropriate capacity, having a high percentage of instant cold vapour production (i.e. without addition of sensitive heat), while the speed is increased (e.g. in the converging of a Venturi tube);
- now, the speed of the air current is reduced e.g. in the diverging of a Venturi tube), so that the pressure increases again, and the current is sent to a drop setting which determines the first phase of condensing-destruction, due to the continuous presence of vapour conditions near to saturation;
- the air current to be depurated, having already undergone a first, raw depuration, is sent now into a high pressure fan, which can overcome the charge losses of the air ventilation as well as dynamically maintain in the Venturi tube a pressure relatively low if compared to the one of the catching point of the air, and to dynamically maintain in the vapour condensing elements described hereinbelow a relatively high pressure, if compared to the one of expulsion into the atmosphere of the air current;
- the air is already in compression, downstream of the compressor-fan, and is sent to the first calm chamber, having the function of condensing chamber, where the air is slowed down from its initial speed and deviated so as to separate it from the fog drops, which are going to fall on the walls of the chamber;
- due to the pressure increase, due to the action of the fan as well as to the speed reduction, in the first calm chamber a fog appears which quickly precipitates on the bottom on the chamber, due to gravity, as well as on the walls of said chamber, due to inertia, and is collected in the circulating liquid.

In fact it is known that, if for the air saturated in vapour, that is mixed with a liquid at a temperature lower to the critical temperature of said liquid, a quick volume reduction occurs due to the compression, an instant change from a saturated vapour to a over-saturated vapour condition occurs, that remains such for a determined time period, if the air is pure.

In the case of polluted air, which is the treatment object of the method according to the present invention, the volume reduction of the air saturated in vapour determines the instant condensing of the liquid onto the polluting particle forming the same quantity of condensing germs.

The first calm chamber, on the way of the air to be depurated, is followed by an element for the sensitive reduction of the outlet section, which involves a localized increase of the air speed.

Said element for the reduction of the outlet section from the calm chamber may also consist of, e.g., the deviation blading of the air, typical of a cyclone with axial symmetry in which the free passage section gets reduced to half, one third or more.

Near said outlet section from the calm chamber, the air crosses the action field of the cold atomizers-evaporators of appropriate capacity, and this causes an instant cold evaporation of the liquid, favoured by the local increase of the speed and by the concurrent lowering of the pressure.

Immediately after having crossed the instant evaporating area, the air current enters into a second calm chamber where a second instant condensing takes place, with adhesion of the fog particles to the walls of the chamber where they reach due to the deviation of the flow, and on the bottom of said chamber.

According to the present invention, if a cyclone is used, the latter will be of the humid kind, in which the two evaporation and condensing areas are so near that they are in touch.

After the second calm chamber and with the same shape, the air to be depurated may meet, on its way, a third and a fourth ... , according to the need to improve the depuration degree.

In each calm chamber, in fact, a group of condensing germs is caught and, at the same time, solvents are melted in the circulating liquid.

At the outlet from the last calm chamber, there are no spraying nozzles for avoiding the tiresome entrainment of drops in the air capacity to be put into the atmosphere, but nonetheless there is a narrow passage section obtained, e.g., by placing a metal anti-drop mesh onto the normal passage section, having the purpose of condensing the over-saturated vapour present which otherwise could not condense due to the lack of the so-called condensing germs.

If the axial symmetry cyclone is used, it will be of the dry kind with an anti-drop mesh in the air outlet section.

The depurated air is sent to the flues and from this into the atmosphere.

The air depuration system according to the present invention works perfectly except in those cases in which, due to the nature of the polluting agents contained in the air current to be depurated, the gorging of e.g., particularly volatile solvents or other polluting agents of the liquid circulating in the air current sent to the flue.

In these cases, the method according to the present invention provides a modification with the circulation in the last calm chamber (s) of the liquid consisting only of distilled water or at least relatively pure water, replacing the mixture of liquids circulating in the rest of the machine.

In fact, pure water can capture the condensing germs present in the gaseous current, without releasing into said air current, important percentages of particles, e.g., of solvents to take off, but releasing, in the worst of the cases, only pure water particles, without any consequence for the ambient.

Furthermore, also said pure water particles may be caught before the discharge into the atmosphere by means of above mentioned anti-drop metal mesh.

In the last case, where the danger of gorging of polluting agents in the atmosphere exists, above mentioned gaseous current treatment must be applied (instant consecutive evaporation and condensing processes) with differentiated liquid, consisting o a water mixture for the first evaporation and condensing treatments, and of pure water for what concerns the last treatments, immediately preceding the expulsion into the atmosphere.

Operating in this way the polluted air is first washed with a relatively dirty liquid, to be send to the re-generation treatment as soon as the need arises for exceeding polluting agents contained therein, and then with pure water.

According to the present invention, the instant cold evaporation of the liquid and the following condensing process of the vapour due to the air compression, are coupled in quick succession so as to determine the condensing of the vapour onto the condensing germs, forming the polluting charge, with the definitive result of transforming it into drops of considerable dimensions and mass and to remove it from the air current by means of simple deviations of said air flow, which can not be followed by the liquid drops, with the end result of catching said polluting charge and make it fall down into the liquid.

For obtaining said result, the fan to be used may be no longer provided downstream of the depuration system and therefore immediately upstream of the flue, but must be comprised in said depuration system body, downstream of the terminal drop separator of the Venturi tube and immediately upstream of the calm chambers.

In act, said fan doesn't work any longer only as an extractor of the air to be depurated, but also as a compressor for said air, becoming also the element that allows the instant condensing process.

Furthermore, for obtaining the maximum reduction of the air pressure in the Venturi tube placed upstream of the compressor-fan, without changing the functionality of the whole system, a variable section throat is placed in the Venturi tube, so that also the air speed may be adjusted in the throat, and the pressures in the depuration system.

The low pressure in the Venturi tube, obtained due to the throttling of the throat as well as of the very high speed of the air in said throat, together with the use of cold atomizer-nozzles, determines the immediate transformation of the air current to be depurated into an air current charged with saturated vapour.

The following compression of the air current, that occurs downstream of the compressor-fan, causes the instant condensing of the saturated vapour around the condensing germs. If necessary, the process may be improved in the following calm chambers.

The elements necessary for performing the depuration method according to the present invention, without the use of the anti-gorge system to be realized in the last part of the treatment, may be described as follows.
- a Venturi tube with variable of fix throat, preferably variable;
- a plurality of cold evaporator-atomizers inserted onto a circulation circuit for a high pressure liquid, therefore provided with a circulation pump with appropriate prevalence;
- a high prevalence compressor-fan, preferably of the centrifugal self-cleaning kind;
- calm chambers, having the feature of separating the condense drops by deviating the air curr ent and characterized each in a considerable throttling of the outlet section of the air, as well as of the condensing collection system with the following leading of the same to the circuit of the circulating liquid;
- the first calm chamber will be provided with evaporator-atomizers in the outlet section, as well as the following ones;
- the last calm chamber will have no evaporator-atomizers in the outlet section, as in said not narrow section the anti-drop and anti-condensing metal mesh -is placed, having the function of condensing the possibly present over-saturated vapour, collecting the condensing and sending it back to the circuit of the circulating liquid;
- a system for filtering and treating the circulating liquid, with the purpose of controlling the saturation degree of the polluting substances;
- a system for the control of the degree of the saturated vapour of the air current in the Venturi tube;
- an electric feeding and control panel.

Beyond all mentioned elements for said treatment, without the anti-gorge system, for the realization of the method according to the present invention with the anti-gorge system, the present invention also provides the presence of the following elements:
- a machine for separating the water from the circulating liquid;
- a machine for depurating the water, or a machine for distilling said water;
- cold evaporator-atomizer nozzles of pure water, installed onto an apposite circuit of pure water circulation provided with an appropriate high prevalence pump;
- a system for controlling the purity degree of the circulating water with discharge of the same into the liquid circulating in the remaining part of the machine, when the purity degree sinks below the pre-determined values;
- a panel for feeding and controlling the functioning of above mentioned elements.

For what concerns the succession of the elements for the realization of the method complete with the anti-gorge system, they are, in the sequence n which they are crossed by the air to be depurated:
- nozzles for evaporating and atomizing a liquid, placed upstream or in the converging of the Venturi tube;
- a Venturi tube with fix or variable throat;
- a drop setter;
- a high prevalence compressor fan (the air is in depression in all elements immediately upstream of the compressor-fan and in instant over-pressure immediately downstream);
- a first calm chamber, followed by the narrow outlet section, wetted by the evaporator-atomizer nozzles of the circulating liquid (the air is in over-pressure);
- following possible calm chambers with narrow outlet sections, wetted by the evaporator-atomizer nozzles of circulating liquid (the air is in over-pressure);
- one or more calm chambers provided with narrow outlet sections, wetted by the pure water spraying nozzles, It must be underlined that said section is present only when the anti-gorge treatment is requested (the air is in over-pressure);
- a calm chamber provided, in the outlet section, with an anti-drop mesh having the function of replacing the lacking condensing germs, i.e. having the purpose of causing the instant condensing of the over-saturated vapour (the air in light over-pressure);
- flue.

## Claims

1. Method for the depuration of air or other gases polluted by powders, fumes, gases, vapours and solvents, also aromatic, by means of instant saturation in vapour of the gaseous flow and its further instant condensing by compression, having the following sequence of steps;
- inlet of a gaseous flow to be depurated in a depuration system;
- first humidification by atomization of a water-based liquid in the gaseous flow, while the speed of the flow is increased, favouring an instant cold evaporation of the liquid, and then quickly reducing the speed of the flow passing the gaseous flow in a chamber for the deposition of a first mixture of liquid and pollutants;
- instant compression of the gaseous flow through a fan-compressor or the like;
- direct inletting in a first calm chamber where the speed of the flow is reduced, thus producing a condensation and the deposition of a second mixture of liquid and pollutants, then humidification by atomization of a water-based liquid in the gaseous flow while the speed of the flow is increased and then quickly reduced in a narrowed outlet section of said first calm chamber;
**characterized in that** :
- then, for one or more times, direct inletting of the gaseous flow in a further calm chamber where the speed of the flow is reduced, thus producing a condensation and the deposition of then humidification by a further mixture of liquid and pollutants atomization of a water-based liquid in the gaseous flow while the speed of the gaseous flow is increased and then quickly reduced in a narrowed outlet section of said further calm chamber.

2. Method for the depuration according to claim 1, wherein, for said first humidification, a Venturi tube is used causing condensation.

3. A method for the depuration according to claim 1, wherein pure water is used in one or more of the last calm chambers, after the fan-compressor.

4. A method for the depuration according to claim 1, wherein the entity of the depuration effect is varied, varying the prevalence of the fan-compressor.

5. A method for the depuration according to claim 1, wherein said water-based liquid contains hydrocarbons.

6. A method for the depuration according to claim 1 or 5, wherein said water-based liquid contains solvents.

7. A method for the depuration according to claim 1, wherein the entity of the depuration effect is varied, varying the area of the narrowed sections.

8. A method for the depuration according to claim 1, wherein the water based liquid is atomized by spaying nozzles.

9. A method for the deputation according to claim 1, wherein the depurated gaseous flow is dehumidified before being sent into the atmosphere.

10. A method for the depuration according to claim 1, wherein said fan-compressor is a centrifugal fan-compressor.

## Patentansprüche

1. Methode zur Reinigung von Luft oder anderen Gasen, verschmutzt durch Pulver, Rauch, Gas, Dampf und Loesungsmittel, auch aromatische, durch eine sofortige Saettigung in Dampf des gasigen Flusses, und seiner sukzessiven, sofortigen Kondensierung durch Komprimierung, mit den folgenden sukzessiven Phasen:
- Einfuehrung des zu reinigenden, gasigen Flusses in ein Reinigungsystem.
- Erste Befeuchtung durch eine verspruehte Fluessigkeit auf waessriger Basis in den gasigen Fluss, waehrend die Geschwindigkeit im Fluss erhoeht wird, beguenstigend eine instante, kalte Verdunstung der Fluessigkeit, und dem zufolge schnell die Fliessgeschwindigkeit verringert, waehrend der gasige Fluss in eine Kammer geleitet wird zur Ablagerung der ersten Verbindung von Fluessigkeit und Verschmutzung.
- istantante Komprimierung des gasigen Flusses durch einen Ventilator-Kompressor oder aehnliches .
- direkter Eintritt in eine erste Ruhekammer, wo die Flussgeschwindigkeit reduziert wird, dadurch beguenstigend eine Kondensierung und die Ablagerung der zweiten Mischung aus Fluessigkeit und Verschmutzungs, folgend der Befeuchtung durch Verspruehung einer waessrigen Base in den gasigen Fluss waehrend die Geschwindigkeit des Flusses erhoeht wird und dann schnell reduziert wird durch eine Verengung am Ausgang der erwaehnten ersten Ruhekammer.
- Charakterisiert in dem
- danach, ein oder mehrere Male, direkten Eingang des gasisgen Flusses in eine weitere Ruhekammer, in weicher der Durchfluss des gasigen Flusses reduziert wird, wo die Durchlauf-geschwindigkeit reudziert wird, dadurch beguenstigend die Kondensierung und die Ablagerung einer weiteren Mischung aus Fluessigkeit und Schmutz.
- Weiterhin die Befeuchtung durch Verspruehung einer Fluessigkeit auf wasserioesficher Basis in den gasigen Fluss, waehrend die Geschwindigkeit erhoeht wird, und danach schnell wieder reduziert wird in der verengten Ausgangssektion der weiteren Ruhekammer.

2. Methode zur Reinigung nach dem Anspruch 1, wo, fuer die besagte erste Befeuchtung, auch ein Venturi-Rohr benutzt werden kann, Befeuchtung erzeugend.

3. Eine Methode zur Reinigung nach dem Anspruch 1, wobei reines Wasser in einer oder mehreren Ruhekammem benutzt wird, am Ausgang des Ventilator-Kompressor.

4. Eine Methode zur Reinigung nach dem Anspruch 1, in welcher der Grad der Reinigung variabel sein kann, variierend auch den ueberwiegenden Einsatz des Ventilator-Kompressor.

5. Eine Methode zur Reinigung nach dem Anspruch 1, wo die Fluessigkeit auf waessriger Basis auch Wasserstoff enthalthen kann.

6. Eine Methode zur Reinigung nach dem Anspruch 1 oder 5, wo die besagte Fluessigkeit auf waessriger Basis Loesungsmittel enthalten kann.

7. Eine Methode zur Reinigung nach dem Anspruch 1, in welcher der Grad des Reinigungseffiektes variiert wird, durch Variation der verengten Sektionen.

8. Eine Methode zur Reinigung nach dem Anspruch 1, in welcher die waessrige Fluessigkeit mit Hilfe von Spruehduesen zerstaeubt.

9. Eine Methode zur Reinigung nach dem Anspruch 1, in weicher der gereinigte gasige Fluss entfeuchtet wird, bevor er in die Atmosphaere geleitet wird.

10. Eine Methode zur Reinigung nach dem Anspruch 1, in welchem der besagte Ventilator-Kompressor ein Zentrifugal-Ventilator-Kompressor ist.

## Revendications

1. Procédé pour l'épuration d'air ou d'autres gaz pollués de poussières, fumées, gaz, vapeurs et solvants, même aromatiques, par saturation instantanée en vapeur du courant gazeux, et sa successive condensation instantanée par compression, ayant les phases successives suivantes :
- immission du courant gazeux à épurer dans un système d'épuration ;
- première humidification par atomisation d'un liquide à base aqueuse dans le courant gazeux, tandis que la vitesse du courant est augmentée, favorisant une évaporation instantanée à froid du liquide, et donc réduisant rapidement la vitesse du courant, tandis que le courant gazeux passe dans une chambre pour le dépôt du premier mélange de liquide et polluants ;
- compression istantanée du courant gazeux à travers un ventilateur-compresseur ou similaire ;
- entrée directe dans une première chambre de tranquillisation, où la vitesse du courant est réduite, déterminant ainsi une condensation et le dépôt du deuxième mélange de liquide et polluants, puis l'humidification par atomisation d'un liquide à base aqueuse dans le courant gazeux, tandis que la vitesse du courant est augmentée et depuis rapidement réduit dans une section étroite de sortie de ladite première chambre de tranquillisation;
**caractérisé** comme suit :
- puis, une ou plusieurs fois, entrée directe du courant gazeux dans une ultérieure chambre de tranquillisation, où la vitesse du courant est réduite, déterminant ainsi une condensation et le dépôt d'un ultérieur mélange de liquide et polluants;
- puis l'humidification par atomisation d'un liquide à base aqueuse dans le courant gazeux, tandis que la vitesse du courant gazeux est augmentée et depuis rapidement réduite, dans une section étroite de sortie de ladite ultérieure chambre de tranquillisation.

2. Procédé pour l'épuration selon la revendication 1, où pour ladite première humidification, un tube Venturi est utilisé provoquant la condensation.

3. Un procédé pour l'épuration selon la revendication 1, où de l'eau pure est utilisée dans une ou plusieurs des dernieres chambres de tranquillisation, en aval du ventilateur-compresseur.

4. Un procédé pour l'épuration selon la revendication 1, où le degré d'effet épurant est modifié, en variant la hauteur manométrique du ventilateur-compresseur.

5. Un procédé pour l'épuration selon la revendication 1, où ledit liquide de base aqueuse il peut contenir des hydrocarbures.

6. Un procédé pour l'épuration selon la revendication 1 ou 5, où ledit liquide de base aqueuse il peut contenir des solvants.

7. Un procédé pour l'épuration selon la revendication 1, dans lequel le degré de l'effet d'épuration est modifié, en variant l'aire des sections étroites.

8. Un procédé pour l'épuration selon la revendication 1, dans lequel le liquide aqueux est atomisé grâce à des pulvérisateurs.

9. Un procédé pour l'épuration selon la revendication 1, dans lequel le courant gazeux épuré est déshumidifié avant d'être envoyé dans l'atmosphère.

10. Un procédé pour l'épuration selon la revendication 1, dans lequel ledit ventitateur-compresseur est un ventilateur-compresseur centrifuge.
